# EUROPÄISCHE PATENTSCHRIFT

(11) **EP 1 576 364 B1**
(45) Veröffentlichungstag und Bekanntmachung des Hinweises auf die Patenterteilung: **18.03.2009**
(21) Anmeldenummer: 03778251.3
(22) Anmeldetag: 04.11.2003
(51) Int. Cl.: G01N 29/06, G01N 29/24, G10K 11/00, G01S 15/89

(54) **VERFAHREN ZUR AUSWERTUNG VON ULTRASCHALLSIGNALEN EINES FEHLERS IN EINEM WERKSTÜCK**
METHOD FOR EVALUATING ULTRASONIC SIGNALS OF A FLAW IN A WORKPIECE
PROCEDE D'EVALUATION DE SIGNAUX ULTRASONORES D'UN DEFAUT D'UNE PIECE

(30) Priorität: 18.12.2002 DE 10259658
(43) Veröffentlichungstag der Anmeldung: 21.09.2005
(73) Patentinhaber: Agfa NDT GmbH, D-50354 Hürth (DE)
(72) Erfinder: KLEINERT, Wolf, 53125 Bonn (DE)
(74) Vertreter: Kayser, Martin
(86) Internationale Anmeldenummer: PCT/DE2003/003654
(87) Internationale Veröffentlichungsnummer: WO 2004/057326

(56) Entgegenhaltungen:
- DE-A- 19 803 615
- GB-A- 1 239 970
- US-B1- 6 234 025
- B. GROHS, O.A. BARBIAN, W. KAPPES, H. PAUL, R. LICHT, F.W. HÖH: "Characterization of flaw loacation, shape, and dimensions with the ALOK system" MATERIALS EVALUATION, Bd. 40, Januar 1982 (1982-01), XP0009030157
- V. DEUTSCH, M. PLATTE, M. VOGT: "3.4.3.6 Rechnergestützte Fehlerbeschreibung" ULTRASCHALLPRÜFUNG, 1997, Seiten 133-141, XP002278716 SPRINGER VERLAG BERLIN HEIDELBERG
- U. SCHLENGERMANN: "Characterization of reflectors by ultrasonic methods" NDTNET, Bd. 1, Nr. 12, Dezember 1996 (1996-12), Seiten 1-8, XP002278717
- U. SCHLENGERMANN, U. WIELPÜTZ: "Beitrag zur Ersatzfehlergrößenbestimmung beim Ultraschallprüfen nach der Tandemmethode" SCHWEIßEN UND SCHNEIDEN, Bd. 26, Nr. 5, 1974, Seiten 169-172, XP0001189423

## Beschreibung

Die Erfindung bezieht sich auf ein Verfahren zur Darstellung von Echosignalen, die mit Hilfe eines Ultraschall-Prüfgeräts für die zerstörungsfreie Prüfung eines Prüfkörpers gewonnen werden.

Für die zerstörungsfreie Prüfung eines Werkstücks durch Ultraschall sind geeignete Prüfgeräte bekannt. Ganz allgemein verwiesen wird auf das DE-Buch von J. und. H. Krautkrämer, Werkstoffprüfung mit Ultraschall, sechste Auflage.

Der Winkelprüfkopf gibt hochfrequente Schallimpulse (ca. 1 - 10 MHz) ab, die in das zu prüfende Werkstück eingeschallt werden und die dann einerseits an der Frontfläche reflektiert werden und zum Winkelprüfkopf zurücklaufen und die andererseits in das Werkstück eindringen, wo sie an einer Rückwand des Werkstücks mindestens einmal reflektiert werden. An inneren Inhomogenitäten, wie zum Beispiel an einem Materialfehler, treten Schallreflexionen auf, die vom Winkelprüfkopf wieder empfangen und im Ultraschallgerät verarbeitet werden.

Es wird nach dem Impuls-Echoverfahren gearbeitet. Der Winkelprüfkopf gibt vorzugsweise periodisch Ultraschallimpulse ab und empfängt danach Echosignale dieser abgegebenen Ultraschallimpulse. Im Allgemeinen ist das Echosignal der Frontfläche ein besonders starkes Signal, das die weiteren Echosignale übersteigt. Die weiteren Echosignale stammen aus dem Werkstück und insbesondere von der Rückwand des Werkstücks. Insoweit ist das Prüfungsverfahren für Werkstücke geeignet, deren Frontfläche im Wesentlichen parallel zur Rückwand verläuft, so dass es zur Ausbildung mehrerer Hin- und Hergänge des Ultraschallimpulses im Werkstück kommt.

Der Winkelprüfkopf wird neben den zu prüfenden Bereich angeordnet und das Schallsignal wird sozusagen seitlich in den relevanten Bereich eingeschallt. Dies ist beispielsweise bei der Ultraschallprüfung von Schweißnähten der Fall.

Ein Winkelprüfkopf arbeitet über einen Fuß aus Plexiglas mit Schrägeinschallung. Die Ultraschallwelle läuft in das Material hinein, bis an einer Grenzfläche eine teilweise oder völlige Reflexion stattfindet. Liegt die reflektierende Fläche senkrecht zur Ausbreitungsrichtung, so wird die Schallwelle in ihre ursprüngliche Richtung reflektiert und erreicht nach einer gewissen Laufzeit wieder einen im Winkelprüfkopf angeordneten piezoelektrischen Schwinger, der sie in einen elektrischen Impuls zurückverwandelt. Der zurückkehrende Ultraschall wird zum Teil an der Grenzfläche Schwinger-Werkstücksoberfläche erneut reflektiert, dieser kleine Schallanteil durchläuft das Werkstück ein zweites Mal. Auf diese Weise entsteht beim Impuls-Echoverfahren durch mehrfache Reflexion an Grenzflächen (Prüfteil-Rückwand oder Fehler) eine sogenannte Echofolge.

Bei einem ungestörten Prüfkörper wird der Schall also jeweils zwischen Frontfläche und Rückwand des Prüfkörpers reflektiert und läuft unter einem bestimmten Winkel immer weiter in die vom Winkelprüfkopf wegweisende Richtung in den Prüfkörper hinein.

Bei der Überprüfung von Schweißnähten wird der Winkelprüfkopf entlang der Schweißnaht bewegt, bis ein maximales Fehlerecho entsteht. Die empfangenen Echosignale werden dabei unmittelbar auf dem Monitor dargestellt. Die Darstellung erfolgt allgemein als sogenanntes A-Bild, bei dem über der Zeitachse die Spannungswerte der empfangenen Echosignale dargestellt werden. Bei mehrfachen Hin- und Hergängen zwischen Frontfläche und Rückwand erhält man eine Folge gleichabständiger Echosignale, deren Amplitude mit wachsender Zeit im Allgemeinen abnimmt. Dabei werden die einzelnen Hin- und Hergänge, also die Strecke des Schalls von der Frontfläche zur Rückwand und umgekehrt, jeweils als Bein bezeichnet. Ausgehend vom Winkelprüfkopf wird also zunächst ein erstes Bein erzeugt, das von der Frontfläche schräg bis hin zur Rückwand verläuft. Dort wird der Schall reflektiert und es bildet sich ein zweites Bein, welches von der Rückwand bis zur Frontfläche verläuft, usw.

Die Position eines Reflektors (Fehlers) im Prüfstück wird auf Basis der bekannten und gemessenen Daten errechnet. Die Echoamplitude wird für eine Abschätzung der Fehlergröße herangezogen. Dies ist jedoch nicht zuverlässig möglich, da die Echoamplitude wesentlich mehr Einflüssen unterworfen ist als die Schallaufzeit.

Es sind Verfahren bekannt, die eine Abschätzung der Fehlergröße oder der Ungänze erlauben. In diesen Verfahren wird die Größe (Durchmesser) eines Modellreflektors (Kreisscheibe, zylinderförmiger Reflektor) abgeschätzt. Die so ermittelte Größe ist nicht identisch mit der tatsächlichen Fehlergröße und wird daher als äquivalenter Kreisscheiben- bzw. Querbohrungsdurchmesser bezeichnet. Bei Verwendung von Kreisscheibenreflektoren hat sich die kürzere Bezeichnung Ersatzreflektorgröße (ERG) durchgesetzt. Dass die tatsächliche Fehlergröße nicht mit der Ersatzreflektorgröße übereinstimmt, liegt daran, dass die von einem natürlichen Fehler reflektierten Schallanteile zusätzlich durch die Form, Orientierung und Oberflächenbeschaffenheit des Fehlers beeinflusst werden. Da bei der manuellen Ultraschallprüfung weitergehende Untersuchungen hierzu schwierig und wenig praktikabel sind, werden in den meisten Spezifikationen und Richtlinien zur Ultraschallprüfung deshalb die Kriterien zur Registrierung von Fehlstellen an eine bestimmte Ersatzreflektorgröße geknüpft. Das bedeutet: Der Prüfer ermittelt, ob eine aufgefundene Fehlstelle die Ersatzreflektorgröße erreicht oder überschreitet, die als Grenzwert (Registriergrenze) im Regelwerk angegeben wurde. Darüber hinaus muss er weitere Untersuchungen durchführen, zum Beispiel zu Registrierlänge, Echodynamik usw., die aber an dieser Stelle nicht weiter diskutiert werden sollen.

Problematisch ist jedoch insbesondere bei der Untersuchung mit einem Winkelprüfkopf, dass dann, wenn die Fehlstelle, beispielsweise ein Lunker, im Extremfall parallel zum Schallweg ausgerichtet ist, die Wahrscheinlichkeit sehr hoch ist, dass der Schall die Fehlstelle verfehlt. Trifft der Schall dagegen auf die Fehlstelle, wird er reflektiert und das Signal registriert. Auf Basis der Ersatzreflektorgröße ergibt sich eine Fehlstelle, die auf dem Monitor sehr klein erscheint. Es wird nicht deutlich, dass sich die Fehlstelle in Richtung des Schallwegs in erheblich größerem Maße erstreckt.

Methoden zu einer möglichst guten Analyse von Fehlstellen werden beispielsweise in den Veröffentlichungen B. Grohs, O.A. Barbian, W. Kappes, H. Paul, R. Licht, F.W. Höh: "Characterization of flaw location, shape, and dimensions with the ALOK system" Materials Evaluation, Bd. 40, Januar 1982 [XP 0009030157], und DE V. Deutsch, M. Platte, M. Vogt; "3.4.3.6 Rechnergestützte Fehlerbeschreibung" Ultraschallprüfung, 1997, S. 133-141, [XP 002278716] beschrieben.

In beiden Veröffentlichungen wird das sogenannte ALOK-Verfahren (Amplituden-Laufzeit-Orts-Kurven) erläutert. Dieses Verfahren wurde ursprünglich zur automatisierten Prüfung von Druckbehältern im Kernkraftbereich entwickelt. Es bietet neben einer grundsätzlichen Verbesserung des Signal-Rausch-Verhältnisses die Möglichkeit, Fehlstellen nach Ort, Abmessung und Orientierung zu beschreiben. Das Verfahren ist im Wesentlichen in zwei Arbeitsschritte unterteilt, nämlich die Datenermittlung und Auswertung. Zunächst werden aus verschiedenen Positionen eine Vielzahl von A-Bildern ermittelt. Werden die Laufzeit und die zugehörige Amplitude des jeweiligen Fehlers jeweils für sich über die zugehörigen Position X des Prüfkopfes aufgetragen, so erhält man die Laufzeit-Ortskurve und die Amplituden-Ortskurve. Zur Rekonstruktion der Fehlerberandung wird praktisch nur die entsprechend bereinigte Laukeit-Ortskurve benötigt, Von einer festen Position auf dem Werkstück aus liegen die möglichen Reflektororte auf einem Kreis mit einem der Echolaufzeit im Werkstück entsprechenden Radius. Derart gebildete Kreise von verschiedenen Prüfkopfpositionen schneiden sich. Die Verbindung aller Schnittpunkte miteinander führt zu einer Nachbildung der Reflektorberandung. In der Praxis werden häufig mehrere Prüfköpfe verwendet und die Rekonstruktion aus verschiedenen Einfallswinkeln und Einschallrichtungen - sofern mehrere Werkstückkanten zugänglich sind - überlagert.

Bei diesem Verfahren handelt es sich nicht um ein "Online-Verfahren", bei dem der Prüfer bereits während des Prüfvorgangs Rückmeldungen erhält. Das Verfahren führt zwar insgesamt zu guten Ergebnissen, der Prüfvorgang selbst wird jedoch durch dieses Verfahren nicht beschleunigt oder verbessert.

Hier setzt nun die vorliegende Erfindung an. Sie hat es sich zur Aufgabe gemacht, die Auswertung von Ultraschallsignalen die mit Hilfe eines Ultraschall-Prüfgeräts für die zerstörungsfreie Prüfung eines Prüfkörpers gewonnen werden, zu verbessern. Aussagen über die Ausrichtung des Fehlers und die Fehlerart, beispielsweise ob der Fehler flächig oder voluminös ist, sollen erleichtert werden. Der Prüfer soll schnell, einfach und zuverlässig erkenne können, ob es sich bei einem aufgefundenen Signal um einen relevanten Fehler handelt.

Erfindungsgemäß wird dies durch ein Verfähren mit den Merkmalen des Anspruchs 1 erreicht.

Im Sinne der vorliegenden Erfindung ist der Begriff Fehler nicht nur wörtlich, also nicht nur im Sinne von Ungänze zu verstehen, sondern soll vielmehr im Sinne von signifikantem Signal verstanden werden. Die Erfindung beinhaltet also das Auffinden jeglicher relevanter Stellen in einem Prüfkörper.

Das Messergebnis wird nicht oder nicht nur als sog. A-Bild dargestellt, sondern es wird die Prüfkörpergeometrie auf dem Display gezeigt. Die Prüfkörpergeometrie wird besonders deutlich, wenn der Prüfkörper im Querschnitt dargestellt wird. Dies ist möglich, wenn die Wanddicke des Prüfkörpers bekannt ist. Da zusätzlich auch der Einschallwinkel, mit dem der Schall ausgehend vom Winkelprüfkopf in den Prüfkörper eingeschallt wird, bekannt ist, ist es auch möglich den Schallverlauf durch den Prüfkörper darzustellen. Besonders informativ ist die Darstellung dann, wenn auch die Abmessungen relevanter zu untersuchender Bereiche in die Querschnittsdarstellung aufgenommen werden können. Dies ist insbesondere bei der Untersuchung von Schweißnähten hilfreich und leicht möglich. Es ergibt sich also eine Darstellung, in der beispielsweise zwei Stahlplatten, die endseitig über eine Schweißnaht miteinander verbunden sind, im Querschnitt dargestellt sind. Entsprechend ist zwischen den beiden Stahlplatte die Schweißnaht durch Linsen dargestellt. Mit Hilfe der Vergleichskörpermethode wird ein ermittelter Fehler direkt maßstäblich in diesem Querschnittsbild dargestellt.

Es ist also erkennbar, welchen Weg der Schall ausgehend vom Winkelprüfkopf durch den Prüfkörper nimmt und in welchem Bein bzw. an welcher Stelle der Schall auf den Fehler trifft. Voraussetzung für ein solches System ist, wie bereits erläutert, dass der Einschallwinkel sowie die Wanddicke des Prüfkörpers bekannt sind. Aus diesen Informationen lässt sich der Schallweg für ein Bein und damit der Übergang von einem Bein zum nächsten bzw. der Punkt an dem die Reflektion des Schalls an der Frontfläche oder an der Rückwand erfolgt, leicht berechnen.

Auf Basis dieser Darstellung ist es möglich, den Prüfer mit relevanten Informationen über den Fehler, insbesondere über seine Größe und Ausrichtung zu informieren, wenn der Prüfer nach dem nachfolgend beschriebenen Verfahren vorgeht.

Zunächst züchtet der Prüfer dann, wenn er auf dem Monitor einen Fehler oder ein entsprechendes Signal aufgefunden hat, dieses entsprechend hoch und speichert das optimierte, auf dem Display dargestellte Bild ab. Der Fehler wird dabei nach der Vergleichskörpermethode, also auf Basis einer Ersatzreflektorgröße abgeschätzt und auf dem Display durch ein Fehlersignal maßstäblich angezeigt. Das dargestellte Bild zeigt den Fehler nur, wie er sich auf Basis der ein Einschallrichtung darstellt. Je nach Ausrichtung des Fehlers kann dieser jedoch deutlich größer sein, als er sich in diesem ersten Bild darstellt, insbesondere dann, wenn sich seine Hauptausrichtung im Wesentlichen parallel zum Schallweg erstreckt.

Deshalb wird in einem nächsten Verfahrensschritt die Ultraschall-Prüfung wiederholt, wobei sich der Winkelprüfkopf an einer anderen Position befindet. Beispielsweise kann diese zweite Prüfung von der gegenüberliegenden Seite des Fehlers aus durchgeführt werden. Auch kann es sinnvoll sein, wenn der Winkelprüfkopf bezogen auf den Fehler um etwa 90 ° versetzt angeordnet ist. Es wird erneut ein Bild gezüchtet und der Fehler wiederum auf Basis einer Ersatzreflektorgröße abgeschätzt und als Fehlersignal angezeigt. Auch dieses Bild wird abgespeichert.

Anschließend werden die abgespeicherten Bilder auf dem Display gleichzeitig dargestellt, also sozusagen übereinander gelegt. Der aufgefundene Fehler ist dann entsprechend durch zwei Fehlersignale, die sich aus den beiden Ersatzreflektorgrößen ergeben haben, angezeigt, wodurch es dem Prüfer möglich ist, auf den ersten Blick zur erkennen, wie sich der Fehler in verschiedene Richtungen erstreckt. Es ergibt sich somit eine zweidimensionale Darstellung des Fehlers.

Erfindungsgemäß wird der auf Basis der Vergleichskörpermethode ermittelte Fehler ebenfalls in jedem abgespeicherten Bild anders dargestellt. Es ist also beispielsweise leicht erkennbar, welches Bein oder welche Richtung dem ermittelten Fehlersignal zu Grunde liegt. Dies erleichtert die Abschätzung bzw. Interpretation der Daten insbesondere in der Darstellung, in der die ermittelten Fehlersignale übereinanderliegend dargestellt werden.

Die Genauigkeit des erfindungsgemäßen Verfahrens kann dadurch erhöht werden, dass der Fehler nicht nur aus zwei, sondern aus mehreren Richtungen untersucht wird und eine entsprechende Anzahl Bilder übereinander gelegt dargestellt wird.

Auch kann es vorteilhaft sein, wenn die Richtung des Winkelprüfkopf zum Fehler beibehalten, jedoch der Abstand verringert oder vergrößert wird. Dadurch wird erreicht, dass sich der Fehler in einem anderen Bein des Schallwegs befindet und der Schall somit unter einem anderen Winkel auf den Fehler trifft. Um dem Prüfer die Ausrichtung des Winkelprüfkopfs zu erleichtern, erfolgt deshalb die Darstellung des Schallweges auf dem Display vorteilhafterweise derart, dass leicht erkennbar ist, aus welcher Bein die Echosignale stammen. Dies bedeutet, dass die einzelnen Beine beispielsweise durch eine jeweils charakteristische Linienart dargestellt werden, oder dass beispielsweise der Hintergrund der einzelnen Beine in einer charakteristischen Art und Weise dargestellt wird.

In einer besonders vorteilhaften Ausführungsvariante errechnet das Ultraschallgerät bzw. ein darin befindlicher Rechner aus den bereits aus verschiedenen Richtungen ermittelten Fehlergröße eine Draufsicht auf den Fehler, sozusagen eine Darstellung des Fehlers in der Prüfkörperebene. Vorteilhafterweise kann diese Draufsicht auch parallel zur gleichzeitig mit der Querschnittsdarstellung auf dem Display dargestellt werden, das Display wird also in zwei Ansichten unterteilt. Vorzugsweise ist auch in dem Draufsichtbild der relevante Bereich, beispielsweise die Schweißnaht, durch Linien dargestellte. Die Auswertung der Fehlerlänge in der Prüfkörperebene kann dabei vorteilhafterweise automatisch nach der Halbwertsmethode erfolgen.

In der Draufsicht wird der Fehler vorzugsweise in einem x-y-Diagramm dargestellt, bei dem auf einer der Achsen die Breite und auf der anderen Achse die Länge des Fehlers in Millimeter oder einer anderen geeigneten Einheit ablesbar ist. Erfindungsgemäß wird bei der Berechnung dieser Darstellung in der Draufsicht die Skalierung automatisch ermittelt.

Grundsätzlich ist also möglich, den Fehler dreidimensional darzustellen.

Vorteilhafterweise wird bei der Speicherung der einzelnen relevanten Querschnittsbilder auch das A-Bild im Hintergrund abgespeichert.

Das erfindungsgemäße Verfahren kann vorteilhafterweise weiterhin dadurch verbessert werden, dass ein Farbdisplay verwendet wird. Dadurch ist es möglich, die aus den jeweiligen Positionen des Winkelprüfkopfes ermittelten Fehlersignale jeweils in einer charakteristischen Farbe darzustellen, was die Qualität der Darstellung hinsichtlich der Erkennbarkeit verbessert. Auch können die verschiedenen Beine des Schallwegs farbig dargestellt werden, was ebenfalls die Unterscheidung erleichtert. Neben LCD-Displays haben sich auch andere Farbmonitore, beispielsweise Plasma-Displays bewährt.

In einer weiteren vorteilhaften Ausführungsvariante weist der Winkelprüfkopf einen Taster zur Aufnahme der Nullpunktposition zu Anfang des Prüfvorgangs auf. Dies bedeutet, dass die Prüfung an einer definierten Stelle auf den Prüfkörper beginnt, wobei diese Stelle im System gespeichert wird. Somit ist es möglich, relevante Positionen des Winkelprüfkopfes im Nachhinein auf Basis der gespeicherten Daten nachzuvollziehen. Der Winkelprüfkopf weist hierzu Mittel auf, die dazu dienen, die jeweilige Position auf der Oberfläche des zu prüfenden Körpers in Bezug auf einen Ort anzugeben der zum Zeitpunkt des Messstartes vorlag. Dies kann beispielsweise mit Hilfe einer Digitalkamera erfolgen, die mit dem Gehäuse des Winkelprüfkopfs fest verbunden ist. Sie ist so ausgerichtet, dass sie die Oberfläche des zu prüfenden Körpers erfasst. Dabei soll sie möglichst nahe an der Stelle ein Bild dieser Oberfläche liefern, an der einen Zentralstrahl des aktiven Schallelements die Oberfläche durchtritt. Mittels dieser Digitalkamera wird in Zeitabständen ein elektronisches Bild von dem Teilstück Oberfläche, das sich jeweils unter der Linse der Digitalkamera befindet, dass also in der Gegenstandsebene liegt. Das Teilstück kann beispielsweise die Abmessungen von wenigen Millimetern, beispielsweise von 2 x 2 oder 4 x 4 mm haben. Vorzugsweise wird in vorgegebenen festen Zeitabständen von der Digitalkamera ein Bild des jeweiligen Teilstücks Oberfläche, Hierzu wird auf die Anmeldung DE 100 58 174 A1 des gleichen Anmelders verwiesenen.

Ist die Schweißnahtgeometrie bekannt und im Ultraschallprüfgerät bzw. im Rechner gespeichert, können sowohl räumliche Grenzwerte als auch Grenzwerte bezüglich der zu berücksichtigenden Amplitude eingegeben werden. Wenn die Nullpunktposition zu Anfang des Messvorgangs ermittelt wurde, kann die Entfernung des Winkelprüfkopfes von der Schweißnaht auf Basis der Beinlänge bzw. der Wanddicke und des Einschallwinkels jederzeit berechnet werden. Somit ist es mit Hilfe einer Blendennachführung möglich, jederzeit und unabhängig von der Position des Winkelprüfkopfes lediglich dcn Bereich der Schweißnaht auf dem Monitor darzustellen.

Mit Hilfe der beschriebenen Blendennachführung ist es auch möglich, eine Selektion der in der Draufsicht darzustellenden Fehler vorzunehmen. Beispielsweise kann sinnvoll sein, wenn ein Fehler nur dann dargestellt wird, wenn er eine bestimmte Größe aufweist. Bezüglich der Fehlergröße wird also eine minimal und eine maximal zu berücksichtigende Amplitude als Blende eingegeben. Möglich ist auch die Eingabe lediglich der maximalen Amplitude, wobei weiter bestimmte wird, dass ein Fehler nur dann gezeigt wird, wenn er die Hälfte der maximalen Amplitude übersteigt.

Weitere Vorteile und Merkmale der Erfindung ergeben sich aus den Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:
Figur 1: eine Prinzipdarstellung des Schallverlaufs eines Ultraschallsignals ausgehend von einem Winkelprüfkopf durch einen Prüfkörper,
Figur 2: eine beispielhafte erfindungsgemäße Darstellung von zwei Messbildern in einem Auswertungebild,
Figur 3: eine beispielhafte erfindungsgemäße Darstellung der gewonnenen Messdaten als Draufsicht.

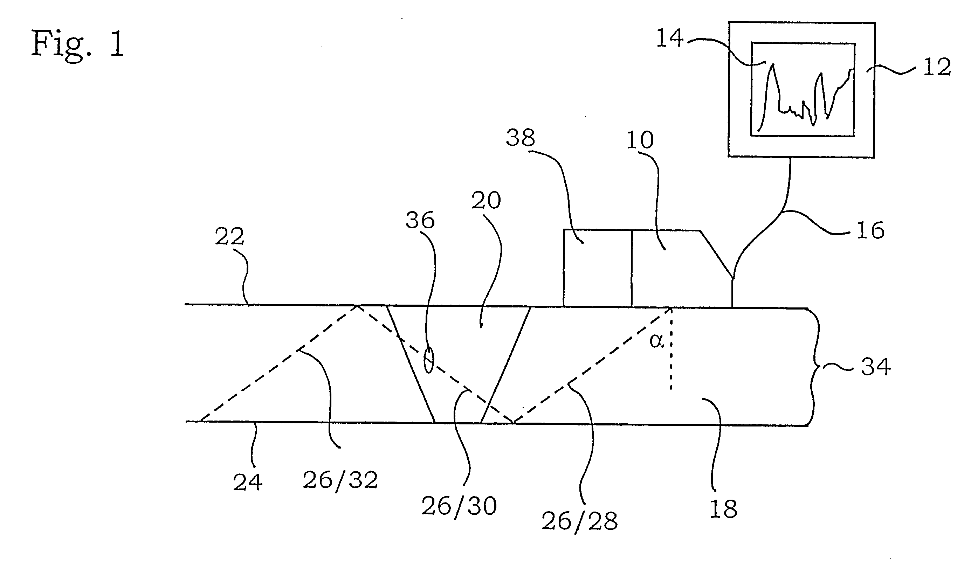

Figur 1 zeigt den prinzipiellen Aufbau einer Ultraschallmessung mit einem Winkelprüfkopf 10 als Ultraschall-Messgerät im Querschnitt. Der Winkelprüfkopf 10, der einen Sender und einen Empfänger beinhaltet, ist mit einem Monitor 12, der wiederum ein Display 14 aufweist, über eine Leitung 16 verbunden. An Stelle der Leitung 16 ist auch eine andere Verbindungsart, beispielsweise per Funk, denkbar. Der Winkelprüfkopf 10 kann auch derart ausgerührt sein, dass der Sender und Empfänger getrennt voneinander angeordnet sind. Im Rahmen der nachfolgenden Beschreibung wird jedoch vorausgesetzt, dass sich der Sender und der Empfänger im Winkelprüfkopf 10 befinden und das mit Hilfe des Echo-Impuls Verfahren gemessen wird.

Der Prüfkörper 18 ist hier ein Teilstück einer Stahlplatte, die mit einer zweiten Stahlplatte über eine Schweißnaht 20 verbunden ist. Der Prüfkörper 18 weist eine Frontfläche 22 und eine Rückwand 24 auf, wobei der Winkelprüfkopf 10 auf der Frontfläche 22 angeordnet ist. Zwischen der Frontfläche 22 und der Rückwand 24 ist ein Schallweg 26 als Linie angedeutet. Ausgehend vom Winkelprüfkopf 20 wird der Schall zunächst in Form von Sendeimpulsen unter einem vorbestimmten Winkel α schräg in den Prüfkörper 18 eingeschallt, bildet ein erstes Bein 28 aus, wird dann an der Rückwand 24 reflektiert, bildet ein zweites Bein 30 aus, gelangt wieder zur Frontfläche 22, wird erneut reflektiert und bildet ein drittes Bein 32 aus usw.. In der beispielhaften Darstellung kreuzt der Schallweg 26 im Bereich seines zweiten Beins 30 die Schweißnaht 20. Aus einer Wanddicke 34 und dem Winkel α ist es leicht möglich, die Länge eines Beines 28, 30, 32 bzw. den Punkt des Übergangs von einem Bein 28, 30, 32 zum nächsten zu berechnen. Ist bekannt, welches Bein 28, 30, 32 auf den Fehler 36 getroffen ist, kann unmittelbar auf den ungefähren Abstand des Fehlers 36 zum Winkelprüfkopf 10 geschlossen werden, zumindest ist klar, dass sich der Fehler auf der Wegstrecke des entsprechenden Beins 28, 30, 32 befindet.

Trifft der Schall auf einen Fehler 36, beispielsweise einen Linker, wird er reflektiert und gelangt je nach Ausrichtung des Fehlers 36 als Echosignal zurück zum Empfänger.

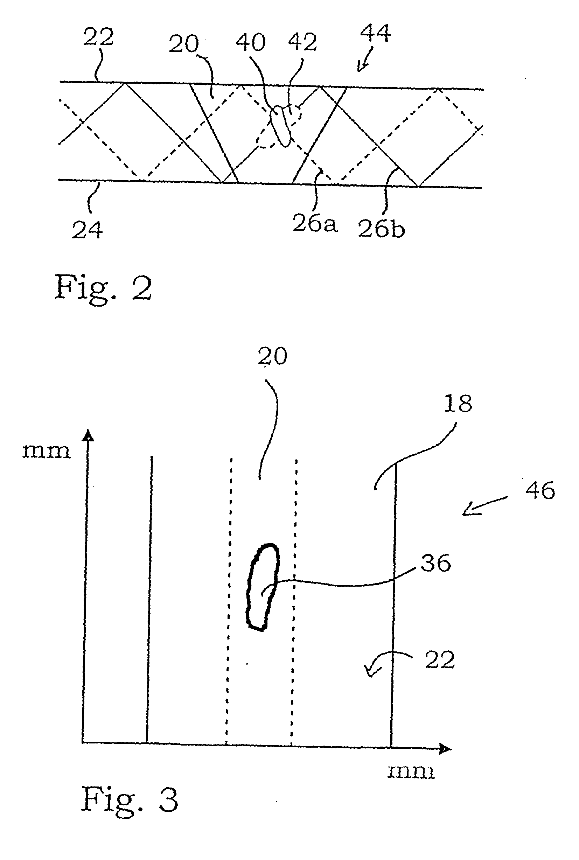

Erfindungsgemäß erfolgt die Darstellung der gewonnenen Messdaten auf dem Display 14 in einem Querschnittsbild (Figur 2). Die Frontfläche 22 und die Rückwand 24 sowie die Schweißnaht 20 sind als Linien in einem Diagramm dargestellt, bei dem auf einer x-Achse und einer y-Achse jeweils Längeneinheiten aufgetragen sind. Vorzugsweise ist weiterhin der Schallweg 26 erkennbar, der sich in die verschiedenen Beine 28, 30,32 aufteilt.

Bei der Prüfung des Prüfkörpers 18 wird der Winkelprüfkopf 10 zunächst auf die Frontfläche 22 aufgesetzt und Ultraschallimpulse unter einem bestimmten Winkel alpha in den Prüfkörper 18 eingeschallt. Trifft der Schall auf einen Fehler 36, wird dieser vorzugsweise nach einer Vergleichskörpermethode auf dem Display 14, also im Querschnittsbild als erstes Fehlersignal 40 dargestellt. Es ist also die Aufgabe des Prüfers, den Fehler 36 aufzufinden und von der ersten Position bzw. Anordnung des Winkelprüfkopf 10 aus ein optimales erstes Fehlersignal 40 zu züchten. Züchten bedeutet in diesem Zusammenhang, dass der Prüfer versucht, das maximale erste Fehlersignal 40 zu finden und darzustellen. Durch die Vergleichskörpermethode wird in die Erstreckung des Fehlers 36 in Bezug auf die erste Anordnung des Prüfkopfes ermittelt und das erste Fehlersignal 40 entsprechend maßstäblich auf dem Display 14 dargestellt. Es ergibt sich ein erstes Messbild, welches der Prüfer im Ultraschall-Prüfgerät bzw. in einem damit verbundenen Rechner speichert.

Es folgt das Auffinden und Züchten des gleichen Fehlers 36 von einer zweiten Position oder Anordnung des Prüfkopfes aus, so dass die Erstreckung des Fehlers 36 in Bezug auf die zweite Anordnung des Winkelprüfkopfs als zweites Fehlersignal 42 ebenfalls maßstäblich auf dem Display in einem zweiten Messbild dargestellt wird. Auch dieses Messbild speichert der Prüfer.

Abschließend erfolgt die gleichzeitige Darstellung des ersten und des zweiten Messbildes in einem Auswertungsbild 44 derart, dass das erste Fehlersignal 40 und das zweite Fehlersignal 42 erkennbar sind. Ein solches Auswertungsbild 44 ist in Figur 2 gezeigt.

In dem in Figur 2 gezeigten Auswertungsbild 44 sind also zwei Messbilder übereinander gelegt dargestellt. Dies ist daran erkennbar, dass zwei Schallwege 26a, 26b eingezeichnet sind, die an verschiedenen Stellen an der Rückwand 24 und entsprechend an verschiedenen Stellen an der Frontfläche 22 reflektiert werden. Vorteilhafterweise weisen die beiden Schallwege 26 eine unterschiedliche Linienart auf, um somit leichter voneinander unterschieden werden zu können. Erkennbar ist auch, dass beide Schallwege 26 jeweils ein Fehlersignal 40, 42 erzeugt haben. Auch die Fehlersignale 40, 42 weisen vorteilhafterweise eine unterschiedliche Darstellung auf, die jeweils an die Darstellung des zugehörigen Beines 28, 30, 32 bzw. des zugehörigen Schallwegs 26 angepasst sein können. Somit ist leicht erkennbar, aus welcher Anordnung des Winkelprüfkopfs 10 das jeweilige Fehlersignal 40,42 stammt. Auch kann es sinnvoll sein, wenn die Darstellung der Fehlersignale 40,42 in Abhängigkeit an die ermittelte Amplitude kodiert, insbesondere farbkodiert erfolgt. Beispielsweise können Fehler 36, die eine bestimmte Größe überschreiten, in einer Signalfarbe, z.B. rot, dargestellt werden.

Die dargestellten Fehlersignale 40, 42 werden nach einer Vergleichskörpermethode, also beispielsweise auf Basis einer Ersatzreflektorgröße abgeschützt und auf dem Display 14 maßstäblich angezeigt. Es zeigt sich also in der beispielhaften Darstellung, dass sich der Fehler 36 stärker quer zum Schallweg 26a als zum Schallweg 26b erstreckt. Werden weitere Bilder übereinander gelegt, ergibt sich ein noch genaueres Bild des Fehlers 36.

Der Benutzer des Ultraschallprüfgeräts bzw. der Prüfer bekommt also mit Hilfe der erfindungsgemäßen Darstellung eine sehr genaue Vorstellung von der Ausrichtungen, der Größe und dem Volumen des Fehlers 36.

In einer besonders vorteilhaften Ausführungsvariante werden die den Messbildern bzw. dem Auswertungsbild 44 zu Grunde liegenden Daten weiterhin in einem Draufsichtbild 46 dargestellt. Dies bedeutet, dass beispielsweise auf dem Monitor 12 bzw. dem Display 14 der Prüfkörper 18 und die Schweißnaht 20 ebenfalls durch Linien dargestellt werden. Die gewonnenen Daten, die den Fehlersignalen 40, 42 zu Grunde liegenden, werden derart umgerechnet, dass die Erstreckung des Fehlers 36 in der Längsebene des Prüfkörpers 18, also in der Ebene die quer zum Querschnittsbild verläuft, auf dem Display 14 angezeigt wird. Auch diese Darstellung erfolgt in einem Diagramm, welches sowohl auf der x- als auch um der y-Achse Längeneinheiten aufweist, so dass die Länge und die Breite des Fehlers 36 in der Längsebene des Prüfkörpers 18 leicht erkennbar ist.

Parallel zur erfindungsgemäßen Darstellung der Messdaten kann auch ein A-Bild erzeugt werden. Dieses kann entweder im Hintergrund abgespeichert oder gleichzeitig auf dem Display 14 angezeigt werden.

Ohnehin können verschiedenen Darstellungen, also die Querschnittsbilder, die Auswertungsbilder 44 und die Draufsichtbilder 46 gleichzeitig auf dem Display 14 dargestellt werden, es kann aber auch sinnvoll sein, wenn der Prüfer zwischen diesen Darstellungen wechseln kann.

In einer weiteren vorteilhaften Ausführungsvariante weist der Winkelprüfkopf 10 einen Taster zur Aufnahme der Nullpunktposition zu Anfang des Prüfvorgangs auf. Dies bedeutet, dass die Prüfung an einer definierten Stelle auf den Prüfkörper beginnt, wobei diese Stelle im System gespeichert wird. Der Winkelprüfkopf 10 weist hierzu ein Mittel 38 auf (vgl. Fig 1), das fest mit dem Winkelprüfkopf 10 verbunden ist und dazu dient, die jeweilige Position auf der Oberfläche des zu prüfenden Körpers in Bezug auf einen Ort anzugeben der zum Zeitpunkt des Messstartes vorlag. Dies kann beispielsweise mit Hilfe einer Digitalkamera erfolgen, die mit dem Gehäuse des Winkelprüfkopfs fest verbunden ist. Sie ist so ausgerichtet, dass sie die Oberfläche des Prüfkörpers erfasst.

Als besonders vorteilhaft hat sich der Verwendung eines Farbdisplays erwiesen, da somit die Kennzeichnung der einzelnen Beine 28, 30, 32 und Fehlersignale 40,42 sowohl vereinfacht als auch optisch deutlicher wird.

Vorteilhaft bei der erfindungsgemäßen Darstellung ist auch, dass auf dem Monitor 12 bzw. dem Display 14 lediglich der Bereich des zu untersuchenden Prüfkörpers 18 dargestellt wird, der bei der Untersuchung von Interesse ist. Dies kann beispielsweise die zu untersuchende Schweißnaht 20 sein. Hierzu werden sowohl räumliche Grenzwerte als auch Grenzwerte bezüglich der zu berücksichtigenden Amplituden vor der Messung in das Ultraschall-Prüfgerät eingegeben und berücksichtigt. Dies bedeutet, dass nur Signale angezeigt werden, deren Ursprung entweder der Bereich und/ oder das Umfeld der zu untersuchenden Schweißnaht 20 ist und/oder deren Signalstärke den minimalen Grenzwert übersteigt und/oder den maximalen Grenzwert unterschreiten.

Aus dem Vorangegangenen ist ersichtlich, dass sich das erfindungsgemäße Gerät und insbesondere auch das damit durchgeführte Verfahren zur Prüfung von Werkstücken für eine Serienmessung eignet. Beispiel für eine Serienmessung ist die Prüfung von Schweißverbindungen von Kraftfahrzeugkarosserien. Das Prüfgerät wird zunächst an einem Werkstück oder wenigen Werkstücke einjustiert, anschließend wird die Serienprüfung durchgeführt.

## Patentansprüche

1. Verfahren zur Darstellung von Echosignalen, die mit Hilfe eines Ultraschall-Prüfgeräts für die zerstörungsfreie Prüfung eines Prüfkörpers (18) gewonnen werden, wobei das Ultraschall-Prüfgerät aufweist:
- einen Winkelprüfkopf (10),
- einen Sender, der mit dem Winkelprüfkopf (10) verbunden ist und der Sendeimpulse erzeugt und an den Winkelprüfkopf (10) abgibt,
- einen Empfänger, der mit dem Winkelprüfkopf (10) verbunden ist und Echosignale empfängt, und
- einen Monitor (12) mit einem Display (14), der mit dem Empfänger verbunden ist zur Darstellung der empfangenen Echosignale in einen Querschnittsbild, derart, dass zumindest eine Frontfläche (22) und eine Rückwand (24) des Prüfkörpers (18) erkennbar ist,
**mit den Verfahrensschritten:**
- Aufsetzen des Winkelprüfkopfes (10) auf die Frontfläche,
- Einschallen von Ultraschallimpulsen unter einem bestimmten Winkel (α) in den Prüfkörper (18),
- Auffinden und Züchten eines Fehlers (36) von einer ersten Anordnung des Winkelprüfkopfes (10) aus, wobei die Erstreckung des Fehlers (36) in Bezug auf die erste Anordnung des Winkelprüfkopfes (10) mit Hilfe einer Vergleichskörpermethode ermittelt und als erstes Fehlersignal (40) in einem ersten Messbild auf dem Display (14) maßstäblich dargestellt wird,
- Speichern des ersten erzeugten Messbildes und eines zugehörigen A-Bildes,
- Auffinden und Züchten des gleichen Fehlers (36) von einer zweiten Anordnung des Winkelprüfkopfes (10), wobei die Enstreckung des Fehlers (36) in Bezug auf die zweite Anordnung des Winkelprüfkopfes (14) mit Hilfe einer Vergleichskörpermethode ermittelt und als zweites Fehlersignal (42) in einem zweiten Messbild auf dem Display (14) maßstäblich dargestellt wird,
- Speichern des zweiten erzeugten Messbildes und eines zugehörigen A-Bildes,
- Darstellen des ersten und des zweiten Messbildes in einem einzigen Auswertungsbild (44) derart, dass das ersten und das zweite Fehlersignal (40, 42) überlagert erkennbar sind,
wobei in den Messbildern und in dem Auswertungsbild (44) auch ein Schallweg (26), aufgeteilt in Beine (28, 30, 32) dargestellt wird, wobei die verschiedenen Beine (28, 30, 32) jeweils unterschiedlich und die Fehlersignale (40, 42) jeweils entsprechend dem Schallweg (26) und/oder dem Bein (28, 30, 32) dargestellt werden, vom dem sie stammen.

2. Verfahren nach Anspruch 1 oder Anspruch 2, **dadurch gekennzeichnet, dass** die verschiedenen Fehlersignale (40, 42) unterschiedlich dargestellt werden.

3. Verfahren nach Anspruch 1 oder 2, **dadurch gekennzeichnet, dass** bei einer Untersuchung einer Schweißnaht (20) diese in den Querschnittsbildern, den Messbildern und dem Auswertungsbild (44) ebenfalls dargestellt ist.

4. Verfahren nach einem der Ansprüche 1 bis 3, **dadurch gekennzeichnet, dass** die gewonnenen empfangenen Echosignale zusätzlich in einem Draufsichtbild (46) derart dargestellt werden, dass die Erstreckung des Fehlers (36) in der Längsebene des Prüfkörpers (18), also in der Ebene die im Wesentlichen quer zum Querschnittsbild verläuft, auf dem Display (14) angezeigt wird.

5. Verfahren nach einem der Ansprüche 1 bis 4 **dadurch gekennzeichnet, dass** der Winkelprüfkopf (10) fest mit einem Mittel (38) verbunden ist, das dazu dient, die jeweilige Position des Winkelprüfkopf (10) auf der Oberfläche des Prüfkörpers (18) zu ermitteln.

6. Verfahren nach einem der Ansprüche 1 bis 5, **dadurch gekennzeichnet, dass** durch Berücksichtigung von Grenzwerten bezüglich der Amplitude und/oder räumlicher Grenzwerte auf dem Display (14) lediglich der Bereich des zu untersuchenden Prüfkörpers (18) und/oder derartige Fehlersignale (40, 42) dargestellt sind, der (die) bei der Prüfung von Interesse sind (ist).

7. Verfahren nach einem der Ansprüche 1 bis 6 **dadurch gekennzeichnet, dass** die Darstellung der Fehlersignale (40,42) in Abhängigkeit an die ermittelte Amplitude kodiert, insbesondere farbkodiert erfolgt.

8. Verfahren nach einem der Ansprüche 1 bis 7, **dadurch gekennzeichnet, dass** sich der Fehler (36) zwischen der ersten Anordnung und der zweiten Anordnung des Winkelprüfkopfes (10) befindet.

9. Verfahren nach einem der Ansprüche 1 bis 9, **dadurch gekennzeichnet, dass** sich die erste Anordnung und die zweite Anordnung des Winkelprüfkopfes (10) auf der gleichen Seite des Fehlers (36) befinden, jedoch einen unterschiedlichen Abstand zum Fehler (36) aufweisen.

## Claims

1. A method of displaying echo signals obtained with the help of an ultrasonic testing apparatus for non destructive testing of a test body (18), said ultrasonic test apparatus comprising:
- an angle beam probe (10),
- an emitter, which is connected to said angle beam probe (10) and which generates initial pulses which it delivers to said angle beam probe (10),
- a receiver, which is connected to said angle beam probe (10) and which receives echo signals, and
- a monitor (12) with a display (14), which is connected to said receiver to display the echo signals received in a cross-sectional image in such a manner that at least one front face (22) and one back wall (24) of the test body (18) can be seen,
**with the method steps of:**
- placing said angle beam probe (10) onto said front face,
- insonifying ultrasonic pulses into said test body (18) at a certain angle (α),
- finding and growing a flaw (36) from a first location of said angle beam probe (10), the extension of the flaw (36) with respect to the first location of said angle beam probe (10) being obtained with the help of a reference block method and being displayed true-to-scale on said display (14) as a first flaw signal (40) in a first measurement image,
- storing said first measurement image generated and an associated A-scan,
- finding and growing the same flaw (36) from a second location of the angle beam probe (10), the extension of the flaw (36) with respect to the second location of said angle beam probe (10) being obtained with the help of a reference block method and being displayed true-to-scale on said display (14) as a second flaw signal (42) in a second measurement image,
- storing said second measurement image generated and an associated A-scan,
- displaying said first and said second measurement image in one single evaluation image (44) in such a manner that the first and the second flaw signal (40, 42) can be seen, superposed,
a sound path (26) divided into legs (28, 30, 32) being also shown in said measurement images and in said evaluation image (44), the different legs (28, 30, 32) being shown differently each and the flaw signals (40, 42) being respectively shown according to the sound path (26) and/or the leg (28, 30, 32) from which they originate.

2. The method as set forth in claim 1 or claim 2, **characterized in that** the different flaw signals (40, 42) are shown differently.

3. The method as set forth in claim 1 or claim 2, **characterized in that,** when a weld seam (20) is being inspected, this weld seam is also shown in the cross-sectional images, the measurement images and the evaluation image (44).

4. The method as set forth in any one of the claims 1 through 3, **characterized in that** the received echo signals obtained are additionally shown in a top view (46), that the extension of the flaw (36) extends in the longitudinal plane of the test body (18), meaning in the plane that extends substantially transverse to the cross-sectional image, is shown on the display (14).

5. The method as set forth in any one of the claims 1 through 4, **characterized in that** the angle beam probe (10) is fixedly connected to a means (38) which serves to detect the respective position of the angle beam probe (10) on the surface of the test body (18).

6. The method as set forth in any one of the claims 1 through 5, **characterized in that,** considering limit values with respect to the amplitude and/or to space, only that region of the test body (18) to be tested and/or such flaw signals (40, 42) is shown on the display (14), which is of interest for testing.

7. The method as set forth in any one of the claims 1 through 6, **characterized in that** the flaw signals (40, 42) are coded, in particular colour-coded as a function of the amplitude obtained.

8. The method as set forth in any one of the claims 1 through 7, **characterized in that** the flaw (36) is located between the first location and the second location of the angle beam probe (10).

9. The method as set forth in any one of the claims 1 through 8, **characterized in that** the first location and the second location of the angle beam probe (10) are located on the same side of the flaw (36), but at a different distance from said flaw (36).

## Revendications

1. Procédé de représentation de signaux d'écho qui sont obtenus à l'aide d'un appareil de contrôle par ultrasons destiné au contrôle non destructif d'un corps à contrôler (18), ledit appareil de contrôle par ultrasons comprenant :
- un palpeur angulaire (10),
- un émetteur qui est relié au palpeur angulaire (10) et qui génère des impulsions d'émission qu'il délivre au palpeur angulaire (10),
- un récepteur qui est relié au palpeur angulaire (10) et qui reçoit des signaux d'écho, et
- un moniteur (12) qui présente un écran de visualisation (14) et qui est relié au récepteur pour afficher les signaux d'écho reçus dans une image de coupe transversale de telle manière qu'au moins une surface frontale (22) et une paroi de fond (24) du corps à contrôler (18) sont visibles,
**ledit procédé comprenant les étapes suivantes :**
- mettre en place ledit palpeur angulaire (10) sur la surface frontale (22),
- émettre des impulsions ultrasonores à un angle déterminé (α) dans ledit corps à contrôler (18),
- détecter et cultiver un défaut (36) à partir d'une première disposition du palpeur angulaire (10), l'extension du défaut (36) par rapport à ladite première disposition du palpeur angulaire (10) étant déterminée à l'aide d'une méthode de corps de comparaison et étant représentée à l'échelle sur ledit écran de visualisation (14) en tant que premier signal de défaut (40) dans une première image de mesure,
- mémoriser ladite première image de mesure produite et une image A associée,
- détecter et cultiver le même défaut (36) à partir d'une seconde disposition du palpeur angulaire (10), l'extension du défaut (36) par rapport à ladite seconde disposition du palpeur angulaire (10) étant déterminée à l'aide d'une méthode de corps de comparaison et étant représentée à l'échelle sur ledit écran de visualisation (14) en tant que deuxième signal de défaut (42) dans une deuxième image de mesure,
- mémoriser ladite deuxième image de mesure produite et une image A associée,
- représenter lesdites première et deuxième images de mesure dans une seule image d'évaluation (44) de telle façon que les premier et deuxième signaux de défaut (40, 42) sont visibles de manière superposée, dans lesdites images de mesure ainsi que dans l'image d'évaluation (44) étant représentée également une trajectoire acoustique (26) divisée en jambes (28, 30, 32), les différentes jambes (28, 30, 32) étant représentées respectivement de manière différente et les signaux de défaut (40, 42) étant représentés chacun conformément à ladite trajectoire acoustique (26) et/ou à la jambe (28, 30, 32) de laquelle ils proviennent.

2. Procédé selon la revendication 1 ou la revendication 2, **caractérisé par le fait que** les différents signaux de défaut (40, 42) sont représentés de manière différente.

3. Procédé selon la revendication 1 ou 2, **caractérisé par le fait que**, lorsque l'on inspecte une soudure (20), cette dernière est représentée, elle aussi, dans les images de coupe transversale, dans les images de mesure et dans l'image d'évaluation (44).

4. Procédé selon l'une quelconque des revendications 1 à 3, **caractérisé par le fait que** les signaux d'écho obtenus reçus sont représentés en sus dans une image de vue de dessus (46) de telle manière que l'extension du défaut (36) dans le plan longitudinal du corps à contrôler (18), c'est-à-dire dans le plan qui s'étend pour l'essentiel transversalement à l'image de coupe transversale, est affichée sur l'écran de visualisation (14).

5. Procédé selon l'une quelconque des revendications 1 à 4, **caractérisé par le fait que** ledit palpeur angulaire (10) est solidarisé à un moyen (38) qui sert à déterminer la position respective du palpeur angulaire (10) sur la surface du corps à contrôler (18).

6. Procédé selon l'une quelconque des revendications 1 à 5, **caractérisé par le fait qu'**en prenant en considération des valeurs limites relatives à l'amplitude et/ou des valeurs limites spatiales sur ledit écran de visualisation (14), c'est ou bien ce sont uniquement la zone du corps à contrôler (18) et/ou les signaux de défaut (40, 42) laquelle (lesquels) est (sont) d'intérêt lors du contrôle qui est ou bien sont représenté(e)s.

7. Procédé selon l'une quelconque des revendications 1 à 6, **caractérisé par le fait que** la représentation des signaux de défaut (40, 42) se fait de manière codée, en particulier de manière codée en couleur, en fonction de l'amplitude déterminée.

8. Procédé selon l'une quelconque des revendications 1 à 7, **caractérisé par le fait que** le défaut (36) se situe entre la première disposition et la seconde disposition du palpeur angulaire (10).

9. Procédé selon l'une quelconque des revendications 1 à 8, **caractérisé par le fait que** la première disposition et la seconde disposition du palpeur angulaire (10) se trouvent du même côté dudit défaut (36), mais à une distance différente du défaut (36).
